Europäisches Patentamt

European Patent Office

Office européen des brevets

(19)

(11) Numéro de publication : **0 033 697**
**B1**

(12)

# FASCICULE DE BREVET EUROPÉEN

(45) Date de publication du fascicule du brevet :
11.04.84

(21) Numéro de dépôt : 81400148.3

(22) Date de dépôt : 30.01.81

(51) Int. Cl.³ : **H 01 G   4/38**, H 01 G   1/08

(54) Condensateur multi-éléments à haute dissipation thermique.

(30) Priorité : 05.02.80 FR 8002495

(43) Date de publication de la demande :
12.08.81 Bulletin 81/32

(45) Mention de la délivrance du brevet :
11.04.84 Bulletin 84/15

(84) Etats contractants désignés :
**DE GB IT**

(56) Documents cités :
**DE-B- 1 132 659**
**US-A- 1 845 130**
**US-A- 2 158 868**

(73) Titulaire : **L.C.C.-C.I.C.E. - COMPAGNIE EURO-
PEENNE DE COMPOSANTS ELECTRONIQUES
101, Boulevard Murat
F-75781 Paris Cedex 16 (FR)**

(72) Inventeur : **Fleuret, Daniel
THOMSON-CSF SCPI 173, Haussmann
F-75360 Paris Cedex 08 (FR)**

(74) Mandataire : **Vesin, Jacques et al
THOMSON-CSF SCPI 173, Bld Haussmann
F-75379 Paris Cedex 08 (FR)**

Jouve, 18, rue St-Denis, 75001 Paris, France

EP 0 033 697 B1

Condensateur multi-éléments à haute dissipation thermique

La présente invention se rapporte au domaine des condensateurs électriques multi-éléments selon le préambule de la revendication 1. Un tel condensateur est connu du brevet US-A-1845 130. Ces condensateurs sont destinés à l'utilisation dans des circuits de puissance. Un des problèmes à résoudre, dans de telles utilisations, est la dissipation de l'énergie calorifique dont ces condensateurs sont le siège, énergie qui prend son origine dans deux causes, à savoir d'une part les pertes diélectriques, et d'autre part les pertes ohmiques, provoquées par la simple résistance présentée par les armatures conductrices elles-mêmes. Cette dernière source de chaleur est particulièrement intense dans le cas où les condensateurs sont réalisés par enroulement, suivant un cylindre, d'une bande de diélectrique métallisée, et non par superposition alternée d'armatures métalliques solides et d'une bande de diélectrique séparée, de résistance électrique plus faible. Les bornes de connexion sont faites le plus souvent par projection d'un métal aux deux extrémités du cylindre.

Le problème de la dissipation thermique devient particulièrement aigu lorsque des capacités de valeur élevées sont à obtenir. On s'adresse alors à une pluralité de condensateurs élémentaires connectés en parallèle par leurs extrémités, les connexions étant réalisées à l'aide de tresses souples, qui joignent à leur rôle électrique, le rôle mécanique d'assemblage des condensateurs élémentaires en un bloc unique. Par suite de la concentration géométrique des sources thermiques, comparée à la faible surface extérieure totale du bloc, l'élévation de température de l'ensemble peut atteindre des valeurs critiques.

Il n'est, de plus, pas possible de compter sur l'évacuation calorifique par les tresses de connexion, qui par suite de leur grande longueur, jointe à leur section limitée, constituent d'une part, des résistances thermiques importantes, et, par suite de leur faible surface latérale, de médiocres éléments de refroidissement par convection.

Enfin, l'assemblage mécanique réalisé par les tresses conductrices souples est, par ailleurs, peu robuste et peu rigide, et la résistance aux vibrations du condensateur multi-éléments ainsi réalisé est médiocre.

Certaines réalisations connues ont fait appel à une forme parallélépipédique des condensateurs élémentaires solidarisés par les tresses, qui se prête mieux à un empilage stable. Mais la dissipation thermique est alors encore moins bonne, et l'exigence d'une forme particulière augmente les coûts de fabrication.

Le condensateur multi-éléments faisant l'objet de la présente invention ne présente aucun de ces inconvénients.

Suivant sa caractéristique fondamentale, l'invention comme revendiquée dans la revendication 1 fait appel, pour la réalisation d'un condensateur multi-éléments, à des plaques-support des condensateurs élémentaires, qui y sont fixés côte à côte par leurs extrémités opposées, et le matériau de ces plaques-support est choisi pour être bon conducteur thermique et électrique. Les moyens de fixation des condensateurs élémentaires sur les plaques sont alors les connexions électriques elles-mêmes, les condensateurs étant connectés ainsi en parallèle. Plus précisément, l'invention se rapporte à un condensateur électrique multi-éléments à haute dissipation thermique, constitué d'une pluralité de condensateurs élémentaires, disposés côte à côte avec leurs deux extrémités opposées entre deux moyens de fixation, chaque condensateur élémentaire ayant au moins un conducteur électrique de raccordement à chacune de ses extrémités, caractérisé en ce que chaque moyen de fixation est constitué d'une plaque-support en matériau électriquement et thermiquement conducteur, ayant en vis-à-vis de chaque condensateur élémentaire une fenêtre empêchant le condensateur élémentaire à la traverser, et en ce que les extrémités de chaque condensateur élémentaire sont fixées respectivement à l'une des plaques-support à travers l'une des fenêtres par l'intermédiaire d'au moins un conducteur.

Les plaques-support assument ainsi trois fonctions, celle de support d'assemblage des condensateurs, celle de connexion électrique réalisant la mise en parallèle de ceux-ci, et celle de drain d'énergie calorifique pour dissipation de celle-ci à l'extérieur du condensateur multi-éléments.

Il résulte de cette structure que, dans le cas où les condensateurs élémentaires sont réalisés suivant des procédés ne permettant pas la soudure directe, à la flamme ou au fer à souder, sur leurs extrémités, sans entraîner des dégradations préjudiciables à leurs qualités électriques, la présente invention rend aisée la soudure localisée, par exemple électrique.

Un autre avantage de l'invention réside dans le fait que les plaques-support d'assemblage, utilisées pour assurer les liaisons électriques et thermiques, peuvent être exploitées pour constituer les connexions du condensateur multi-éléments lui-même.

Enfin, selon un autre mode particulier de réalisation de l'invention, les plaques métalliques peuvent, lorsque les puissances à évacuer le justifient, recevoir des surfaces de refroidissement, telles que des ailettes fonctionnant par convection naturelle ou forcée, ou recevoir des canalisations dans lesquelles peut circuler un fluide de refroidissement.

L'invention sera mieux comprise à l'aide de la description ci-après, en s'appuyant sur les figures annexées, où :

la figure 1 représente, en vue partielle, un mode de réalisation d'un condensateur multi-éléments selon l'invention ;

les figures 2, 3 et 4 représentent, en vue partielle, des variantes de réalisation de connexions, dans le condensateur de l'invention ;

la figure 5 représente, en vue partielle, un condensateur selon l'invention, à refroidissement par convection ;

la figure 6 représente, en vue partielle, un condensateur selon l'invention, à refroidissement forcé.

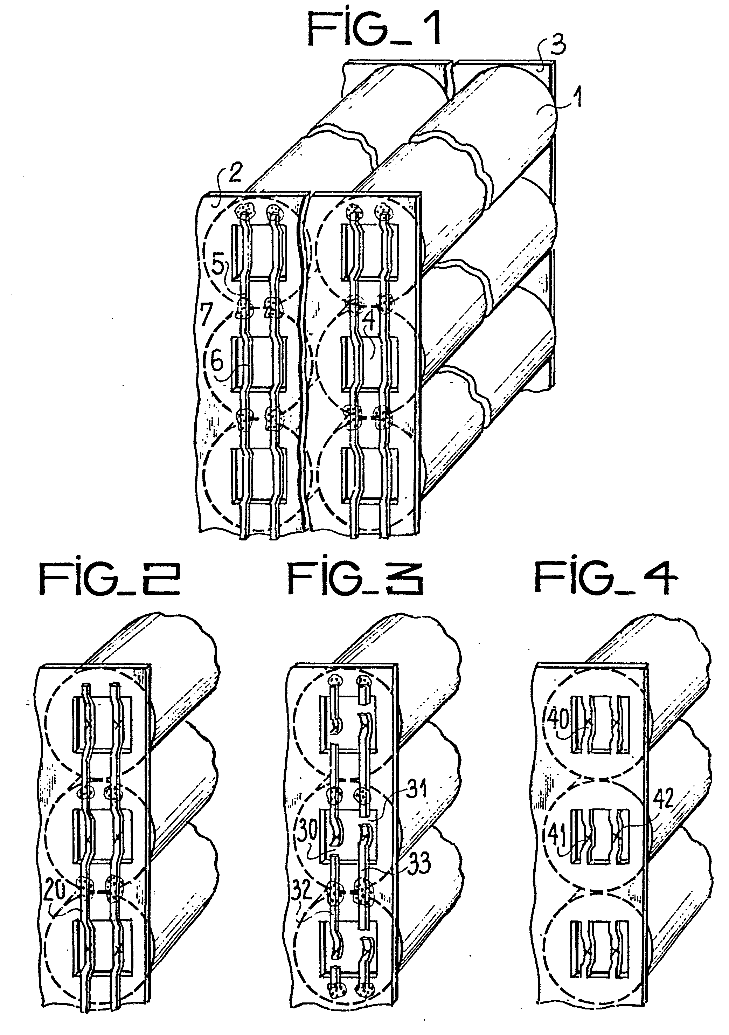

La figure 1 représente un condensateur multi-éléments selon un premier mode de réalisation de l'invention.

Les condensateurs élémentaires cylindriques tels que 1 sont disposés côte à côte, avec leurs axes de révolution parallèles, entre deux plaques-support 2 et 3 parallèles.

Des fenêtres telles que 4, de forme telle que la base de chaque condensateur ne puisse les traverser, sont découpées en vis-à-vis de ces condensateurs et ils sont fixés sur les plaques par l'intermédiaire de leurs connexions électriques 5, constituées par des tresses souples à brins conducteurs multiples, réalisées en un matériau bon conducteur de l'électricité et de la chaleur, tel que le cuivre. Un matériau de soudure connecte chaque conducteur à une des deux plaques en 7. Dans le mode de réalisation de la figure 1, la tresse conductrice est continue, et, compte tenu de la longueur très réduite de chaque segment de tresse compris entre deux points de soudure respectivement situés sur un condensateur en 6 et sur une plaque en 7, la résistance thermique présentée par ce segment est négligeable.

Par ailleurs, la souplesse mécanique de la tresse permet une certaine mobilité, bien que d'amplitude limitée, de chaque condensateur par rapport aux plaques, assurant une protection des soudures 6 et 7 contre les chocs et les vibrations.

Mais on peut, de plus, constater clairement sur la figure que c'est la structure donnée selon l'invention à chaque plaque-support, à savoir le découpage d'une pluralité d'ouvertures 4, situées en vis-à-vis de la pluralité de condensateurs, qui apporte la possibilité avantageuse, par suite de leurs dimensions choisies juste suffisantes pour le passage d'une électrode de soudure, de pouvoir y effectuer le raccordement de chacun d'eux par soudure électrique localisée non dégradante pour les condensateurs.

La figure 2 représente une variante de réalisation des connexions 5 constituées par des bandes métalliques plates 20 dites « méplats », dont la résistance électrique est plus faible que celle des tresses, et la résistance mécanique plus élevée. Elles peuvent être mises en place par un distributeur de bande en continu.

La figure 3 représente une autre variante, où des coupures des bandes « méplats » ont été effectuées en 30 et 31 par exemple, conférant à la fixation des condensateurs élémentaires une caractéristique d'élasticité, procurée par les segments tels que 32 et 33, de la bande ; la résistance aux conséquences des chocs et vibrations est ainsi améliorée par cette suspension élastique.

La figure 4 représente un mode de réalisation particulièrement simple de l'assemblage des condensateurs élémentaires sur les plaques-support latérales. Les connexions électriques nécessaires à la mise en parallèle des condensateurs y sont réalisées par des portions conductrices telles que 40, directement découpées dans les plaques-support. Elles sont donc constituées du même matériau, et sont continues et d'un seul tenant avec elles. La fixation des condensateurs est alors complètement rigide par rapport aux plaques, et l'opération d'assemblage peut se limiter, pour chacun d'eux à deux points de soudure en 41 et 42.

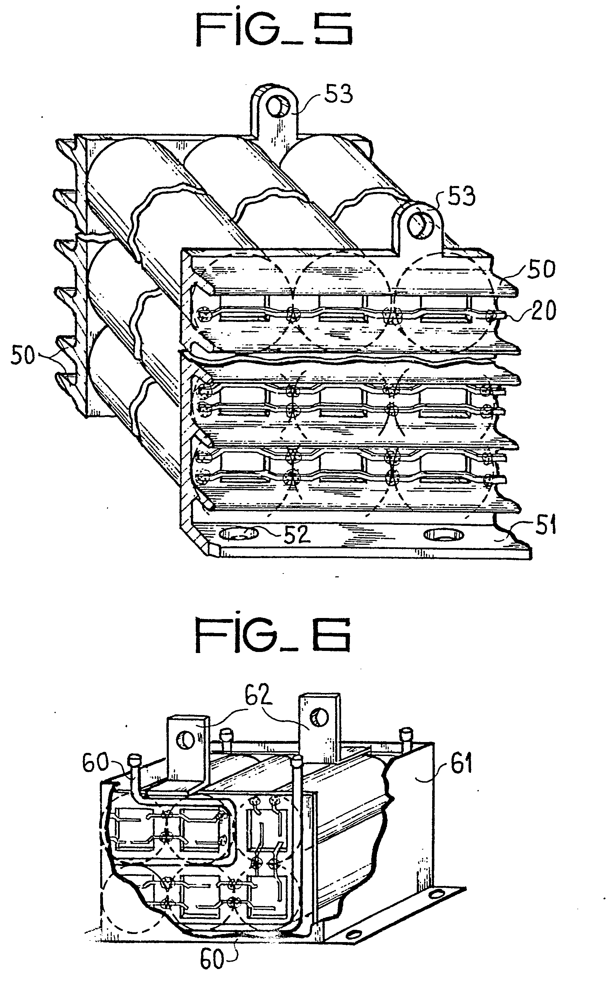

La figure 5 représente un autre mode de réalisation de l'invention, dans le cas de condensateurs multi-éléments pour circuits de grande puissance. Dans ce cas, on fait appel à une augmentation de la dissipation thermique des plaques de fixation, en les munissant de surfaces de radiation thermique telles que 50, sous forme d'ailettes, pouvant fonctionner en convection thermique naturelle, ou forcée par soufflage d'un fluide en mouvement.

Les ailettes peuvent de préférence présenter leur axe longitudinal parallèle aux connexions telles que 20.

Les plaques d'assemblage peuvent par ailleurs, pour assumer complètement leur rôle de support, être munies de surfaces de fixation telles que 51, avec des ouvertures 52 pour introduction de vis et d'écrous par exemple. Elles peuvent aussi être munies, enfin, pour assumer complètement leur rôle de raccordement électrique, être munies de bornes telles que 53, réalisées par exemple sous forme de bandes d'un seul tenant avec elles.

La figure 6 représente encore un autre mode de réalisation du condensateur de l'invention, à refroidissement par liquide. L'existence des plaques-support latérales permet en effet d'y fixer, en bon contact thermique avec elles, des tuyaux 60 parcourus par un fluide de refroidissement convenable. L'ensemble peut alors être avantageusement placé dans un boîtier de protection 61.

L'immobilisation du condensateur dans le boîtier peut être assurée par les ouvertures faites dans les surfaces de fixation 51 de la figure 5. Mais il est plus avantageux de la réaliser par remplissage du boîtier 61 par un produit durcissable, tel qu'une résine époxyde, éventuellement chargée pour une meilleure conductibilité thermique, ou polyester, ou silicone, ou phénolique, mis en place à l'état fluide.

Il est à noter que les différents modes de réalisation de l'invention ont été décrits, pour plus de clarté, en s'appuyant sur des figures différentes. Les bornes de raccordement du condensateur multi-éléments, représentées sur la figure 5, ainsi que les surfaces de fixation représentées sur cette figure, peuvent être introduites dans les modes de réalisation représentés sur les autres figures.

Il est enfin à remarquer que les modes de réalisation décrits font appel à deux conducteurs pour le raccordement électrique de chaque condensateur cylindrique élémentaire, disposition adoptée pour fixer la position angulaire de chacun d'eux ; mais on doit considérer que l'utilisation d'un seul conducteur, suffisant dans le cas de condensateurs parallélépipédiques, est comprise dans le domaine de l'invention.

**Revendications**

1. Condensateur électrique multi-éléments à haute dissipation thermique constitué d'une pluralité de condensateurs élémentaires (1) disposés côte à côte avec leurs extrémités opposées entre deux moyens de fixation (2, 3), chaque condensateur élémentaire (1) ayant au moins un conducteur électrique de raccordement à chacune de ses extrémités, caractérisé en ce que chaque moyen de fixation est constitué d'une plaque-support (2, 3) en matériau électriquement et thermiquement conducteur, ayant en vis-à-vis de chaque condensateur élémentaire (1), une fenêtre (4) empêchant le condensateur élémentaire à la traverser, et en ce que les extrémités de chaque condensateur élémentaire sont fixées respectivement à l'une des plaques-support (2, 3) à travers l'une des fenêtres (4) par l'intermédiaire d'au moins un conducteur (5, 20, 32, 42).

2. Condensateur selon la revendication 1, caractérisé en ce que les extrémités de chaque condensateur élémentaire (1) sont élastiquement fixées à l'une des plaques-support.

3. Condensateur selon l'une des revendications 1 ou 2, caractérisé en ce que chaque conducteur (5, 20, 32) est relié à travers la fenêtre (4) à un point (7) de la surface de la plaque-support (2, 3) adjacente à la fenêtre correspondante.

4. Condensateur selon l'une des revendications 1 à 3, caractérisé en ce que le nombre de conducteurs (5, 20, 32, 42) reliés à chacune des extrémités d'un condensateur est égal à deux.

5. Condensateur selon l'une des revendications 1 à 4, caractérisé en ce que les conducteurs sont d'un seul tenant.

6. Condensateur selon l'une des revendications 1 à 4, caractérisé en ce que les conducteurs sont en forme de tresses multibrins.

7. Condensateur selon l'une des revendications 1 à 4, caractérisé en ce que les conducteurs sont en forme de bandes massives.

8. Condensateur selon la revendication 7, caractérisé en ce que les bandes massives sont des portions découpées des plaques conductrices, et d'un seul tenant avec elles.

9. Condensateur selon l'une des revendications 7 ou 8, caractérisé en ce que chaque bande massive présente une interruption (30, 31) au moins d'un de ses deux segments de raccordement (32, 33) à chaque condensateur élémentaire.

10. Condensateur selon l'une des revendications 1 à 9, caractérisé en ce que les plaques conductrices (2, 3) sont munies d'ailettes de dissipation thermique.

11. Condensateur selon l'une des revendications 1 à 10, caractérisé en ce que les plaques conductrices sont munies de moyens de dissipation thermique constitués par des tuyaux (60) dans lesquels un fluide de refroidissement peut être introduit.

12. Condensateur selon l'une quelconque des revendications précédentes, caractérisé en ce qu'il est fixé dans un boîtier de protection (61).

**Claims**

1. A multi-element electric capacitor having a high heat dissipation capacity and consisting of several elementary capacitors (1) in side-by-side disposition, the opposed end surfaces of these capacitors being located between two fastening means (2, 3), each elementary capacitor (1) having at each end surface at least one electrical branching conductor, characterized in that each fastening means consists of a support plate (2, 3) made of an electricity and heat conducting material and provided with a window (4) in front of each elementary capacitor (1) which window prevents the elementary capacitor from passing there-through, and that the end surfaces of each elementary capacitor are fastened respectively to one of the support plates (2, 3) through one of the windows via at least one conductor (5, 20, 32, 42).

2. A capacitor according to claim 1, characterized in that the end surfaces of each elementary capacitor (1) are elastically fastened to one of the support plates.

3. A capacitor according to one of the claims 1 or 2, characterized in that each conductor (5, 20, 32) is connected through the window (4) to a point (7) of the support plate (2, 3) surface which is adjacent to the corresponding window.

4. A capacitor according to one of the claims 1 to 3, characterized in that the number of conductors (5, 20, 32, 42) connected to each of the end surfaces of a capacitor is equal to two.

5. A capacitor according to one of the claims 1 to 4, characterized in that the conductors are made of one piece.

6. A capacitor according to one of the claims 1 to 4, characterized in that the conductors are constituted of multiwire braids.

7. A capacitor according to one of the claims 1 to 4, characterized in that the conductors are constituted of solid bands.

8. A capacitor according to claim 7, characterized in that the solid bands are cut-out portions of the conducting plates and are integral therewith.

9. A capacitor according to one of the claims 7 or 8, characterized in that each solid band presents an interruption (30, 31) at least in one of its two connection segments (32, 33) at each elementary capacitor.

10. A capacitor according to one of the claims 1 to 9, characterized in that the conducting plates (2, 3) are provided with cooling ribs.

11. A capacitor according to one of the claims 1 to 10, characterized in that the conducting plates are provided with cooling means constituted by tubes into which a coolant fluid is susceptible to be introduced.

12. A capacitor according to any one of the preceding claims, characterized in that it is located in a protective casing (61).

**Ansprüche**

1. Elektrischer Mehrfach-Kondensator hoher Wärmeableitfähigkeit, bestehend aus einer Mehrzahl von Elementarkondensatoren (1), die Seite an Seite und mit ihren entgegengesetzten Enden zwischen zwei Befestigungsmitteln (2, 3) angeordnet sind, wobei jeder Elementarkondensator (1) an jedem seiner Enden mindestens einen elektrischen Anschlußleiter aufweist, dadurch gekennzeichnet, daß jedes Befestigungsmittel von einer Trägerplatte (2, 3) gebildet wird, die aus einem elektrisch und thermisch leitenden Material besteht und gegenüber jedem Elementarkondensator (1) ein Fenster (4) aufweist, durch das aber der Elementarkondensator nicht durchpaßt, und daß die Enden jedes Elementarkondensators an je einer der Trägerplatten (2, 3) durch eines der Fenster (4) hindurch mittels mindestens eines Leiters (5, 20, 32, 42) befestigt sind.

2. Kondensator nach Anspruch 1, dadurch gekennzeichnet, daß die Enden jedes Elementarkondensators (1) an einer der Trägerplatten elastisch befestigt sind.

3. Kondensator nach einem der Ansprüche 1 oder 2, dadurch gekennzeichnet, daß jeder Leiter (5, 20, 32) durch das Fenster (4) hindurch an einem Punkt (7) der Oberfläche der Trägerplatte (2, 3) befestigt ist, die dem betreffenden Fenster benachbart ist.

4. Kondensator nach einem der Ansprüche 1 bis 3, dadurch gekennzeichnet, daß die Anzahl der Leiter (5, 20, 32, 42), die an jedem Ende eines Kondensators angeschlossen sind, zwei beträgt.

5. Kondensator nach einem der Ansprüche 1 bis 4, dadurch gekennzeichnet, daß die Leiter aus einem Stück bestehen.

6. Kondensator nach einem der Ansprüche 1 bis 4, dadurch gekennzeichnet, daß die Leiter aus einer Litze bestehen.

7. Kondensator nach einem der Ansprüche 1 bis 4, dadurch gekennzeichnet, daß die Leiter die Form eines massiven Bandes besitzen.

8. Kondensator nach Anspruch 7, dadurch gekennzeichnet, daß die massiven Bänder aus Abschnitten der leitenden Platten bestehen und mit ihnen ein Stück bilden.

9. Kondensator nach einem der Ansprüche 7 oder 8, dadurch gekennzeichnet, daß jedes massive Band eine Unterbrechung (30, 31) mindestens eines seiner zwei Anschlußsegmente (32, 33) an jedem Elementarkondensator aufweist.

10. Kondensator nach einem der Ansprüche 1 bis 9, dadurch gekennzeichnet, daß die leitenden Platten (2, 3) mit Kühlrippen versehen sind.

11. Kondensator nach einem der Ansprüche 1 bis 10, dadurch gekennzeichnet, daß die leitenden Platten mit Mitteln zur Wärmeableitung versehen sind, die aus Röhren (60) bestehen, in die eine Kühlflüssigkeit eingeleitet werden kann.

12. Kondensator nach einem beliebigen der vorhergehenden Ansprüche, dadurch gekennzeichnet, daß er in einem Schutzbehälter (61) befestigt ist.

0 033 697

FIG_1

FIG_2  FIG_3  FIG_4

## FIG_5

## FIG_6